# EUROPEAN PATENT APPLICATION

(11) **EP 1 291 876 A1**
(43) Date of publication of application: **12.03.2003**
(21) Application number: 02016386.1
(22) Date of filing: 26.07.2002
(51) Int. Cl.: G11B 33/04

(54) **Antiheft device for cases for digital versatile discs and the like**

(30) Priority: 16.08.2001 ES 200101904
(71) Applicant: Inverhouse S.A., 08210 - Barberà del Vallès (ES)
(72) Inventor: Lopez Mas, Antonia, 08190 Sant Cugat del Vallès (ES)
(74) Representative: Revenga Santos, Josep Luis

(57) **Abstract**

The invention discloses an anti-theft device for digital versatile discs and the like and consists of providing the hubs of the case with means guaranteeing that the discs may not be removed by pressure on the major outer surfaces of the case. This object is attained by modifying the structure of said hub in such a way that, when pressure is exerted on said major outer surfaces of the case, the centering means impinge against the opposite inner surface of the case and prevent the retaining tabs from flexing and releasing the disc from the retained position thereof.

The invention is applicable to increase security against the theft of digital versatile discs and the like.

## Description

### Field of the Art

This invention relates to an antitheft device for cases for digital versatile discs and the like.

The term "digital versatile discs" (at times abbreviated to "DVD") designates herein discs capable of storing a massive amount of information, in format of data in general, audio or video, of computer programs or various combinations of these formats.

### Related prior art

The cases containing digital versatile discs and the like are usually manufactured by known techniques of injection molding of synthetic resins (e.g. polypropylene and the like) and are formed by a box and a lid or by two semi-boxes, both being square in plan view, having three free sides and being hingedly connected on the respective fourth side which forms a spine. In this way, when the case is closed, it has the general form of a book and comprises spring closing means.

For clarity, mention will be made hereinafter only to cases formed by a box and a lid, it being understood that reference is also made to the cases formed by two semi-boxes.

Said cases also include one or more hubs that are formed by a plurality of retaining tabs and, at times, of disc centering means. When the retaining tabs are pressed, they flex and allow the disc to be freed from its retained position.

A commercial requirement in the sale of disclosure products, such as DVD, is that the public should be able to accede to them directly and immediately, to obtain information on the content and features thereof and thereby determine whether they are of interest to be acquired. This accessibility frequently leads to the exhibited products being stolen, which causes serious financial harm for the traders.

Digital versatile discs and the like are fragile objects and they are, therefore, distributed and marketed within cases, protecting the surfaces thereof and preventing them from being inutilized. Such cases are also usually individually wrapped in a shrink plastic film, to guarantee that they will not be opened until they reach the end user.

To prevent removal of the DVD and the like contained in their respective cases, the traders have made great efforts to obtain security means making unauthorized removal from the sales establishments difficult.

Security means are known comprising mechanisms provided with visual or acoustic alarms that are activated when sensors located in the neighborhood of the exits from the establishments detect the signals emitted by transmitters, which have previously been fitted in a tamper-proof way to the cases. These security means require the use of deactivation means for such transmitters, so that an authorized removal from the establishment will not trigger activation of the alarms.

Such security means are expensive to acquire and, at the same time, the use thereof represents an additional cost in work time, since, in general, both the attachment of the transmitters to the cases and the deactivation thereof prior to authorized removal thereof must be performed individually.

Furthermore, security means of this type are completely inoperative if the disc can be discreetly removed from the case containing it, without the need to previously remove the plastic wrapper film and without opening it by the three non-hinged sides.

There is provided hereinafter a brief explanation of how the disc can be removed from its case without removing the plastic wrapper film:
a) the major outer surfaces of the case are pressed together, which causes the retaining tabs of the hub to impinge against the opposite inner surface of the case, causing said retaining tabs to flex resiliently and allowing the disc to be freed from the retained position thereof;
b) the plastic film wrapping the case is cut with any appropriate item (for example, a finger nail), along one of the lines of closure of the case; and
c) using an appropriate item (for example, finger nails), a leverage is applied to the center of said line of closure of the case, allowing a minimum degree of opening through which the disc, previously released from the hub, may be discreetly removed.

Once the disc has been removed from its case, the thief can unauthorizedly remove it discreetly from the establishment, camouflaged among his/her personal belongings.

Unauthorized removal of discs from their respective cases in commercial establishments is possible because of the flexible properties of the materials with which such cases are manufactured.

Other security means have been proposed to prevent this removal, consisting of providing the case with additional mechanisms for holding the disc to the hub. Document ES 1047055 U discloses a security case for discs incorporating a sealing device that temporarily fixes both parts of the case with a through passing member that is retained in the hub. Nevertheless, cases provided with additional security means are expensive to manufacture, because they require additional handling operations.

This far, reference has been made to the possibility of theft of the disc in retail establishments. Nevertheless, the disc may be stolen at any time from packaging up to acquisition by an end user, for example, during storage or carriage.

### Summary of the Invention

It is the object of the invention to provide a case for digital versatile discs or the like, integrally made by injection molding of synthetic resins or the like, with means guaranteeing that the disc or discs contained therein may not be removed from the respective hub by accidental or voluntarily applied pressure on the major outer surfaces of the case. This object is attained by modifying the structure of said hub in such a way that, when pressure is exerted on said major outer surfaces of the case, the centering means impinge against the opposite inner surface of the case and prevent the retaining tabs from flexing and releasing the disc from the retained position thereof.

### Brief Description of the Drawings

The invention will be more easily understood with the aid of the accompanying exemplifying drawings, in which:
Figure 1 is a fragmentary perspective view of the case provided with the device of the invention.
Figure 2 is an enlarged top view of the device of the invention.
Figure 3 is an enlarged cross section view on the line III-III of Figure 2.
Figure 4 is an enlarged perspective bottom view of the device of the invention.
Figure 5 is a bottom view of the device of the invention, when a pressure is applied to the outer surfaces of the case.
Figure 6 is a side elevation view of the device of the invention, when a pressure is applied to the outer surfaces of the case.

### Detailed Description of the Invention

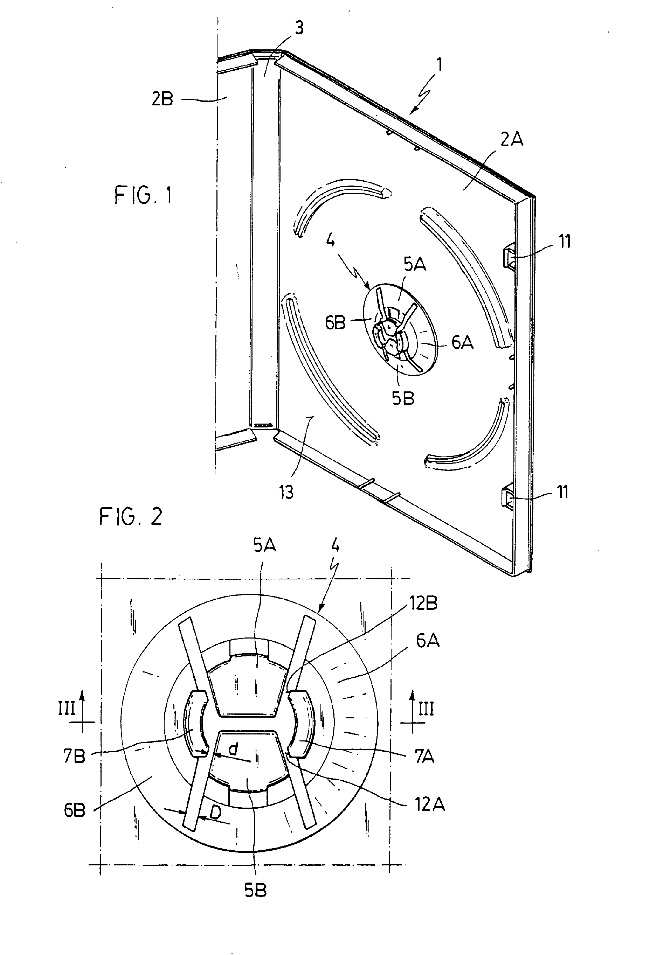

With reference to Figure 1, there is shown therein fragmentarily the inside of a case 1 comprising an anti-theft device according to the invention. The case is formed, in this case, by two semi-boxes 2A and 2B, both being square in plan view, having three free sides and being hingedly connected on the fourth side which forms a spine 3, in such a way that, when the case is closed, it has the general form of a book. The case also comprises spring closing means 11.

The anti-theft device shown in Figures 2 through 4 comprises a hub 4 having retaining tabs 5A and 5B and disc centering means 6A and 6B formed by concentric circular sector segments. The upper portions 7A and 7B of said centering means 6A and 6B are shaped in such a way that the distance H from the inner surface 13 of the case 1 having the hub 4 and the upper surface 14 of said centering means 6A and 6B is greater than the distance h between said inner surface 13 of the case and the upper surface 15 of the retaining tabs 5A and 5B.

With this form, when pressure is exerted on the major outer surfaces of the case, the upper portions 7A and 7B of the centering means 6A, 6B impinge against the opposite inner surface 13 of the case and prevent the retaining tabs 5A, 5B from impinging simultaneously against said inner surface of the case. In this way, the retaining tabs 5A, 5B are prevented from resiliently flexing and releasing the disc from the retained position thereof.

Preferably the difference between said distances H and h ranges from 0.5 to 1.5 mm.

More preferably, the difference between said distances H and h is substantially 0.8 mm.

Additionally, as may be seen in Figure 2, the upper portions 7A and 7B of the centering means 6A and 6B are wider such that the distance d from the side surface of each of said upper portions 7A and 7B of the centering means 6A and 6B, and the nearest side surface of each of the adjacent retaining tabs 5A, 5B is smaller than the width D of the slots separating said centering means from said retaining tabs.

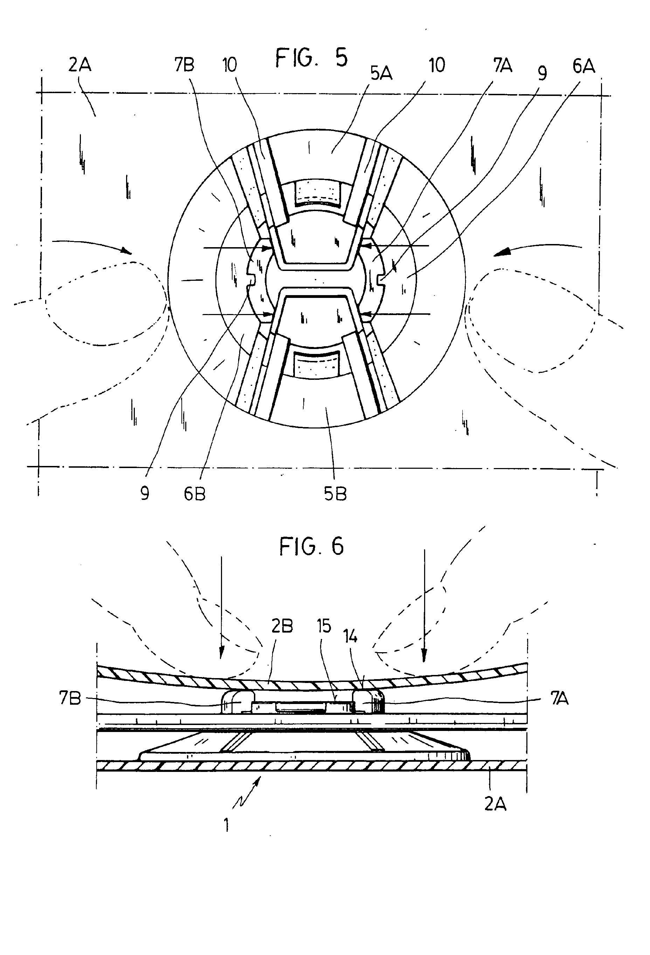

This widening of the upper portions 7A, 7B of the centering means 6A, 6B means that, when a pressure sufficient to resiliently flex the centering means 6A, 6B is exerted, said upper portions 7A, 7B move towards the center of the hub. Thus, the side surface of said upper portions 7A, 7B impinges against the nearest side surface of the adjacent tab and keeps the tabs 5A, 5B wedged in the disc retaining position (see Figures 5 and 6).

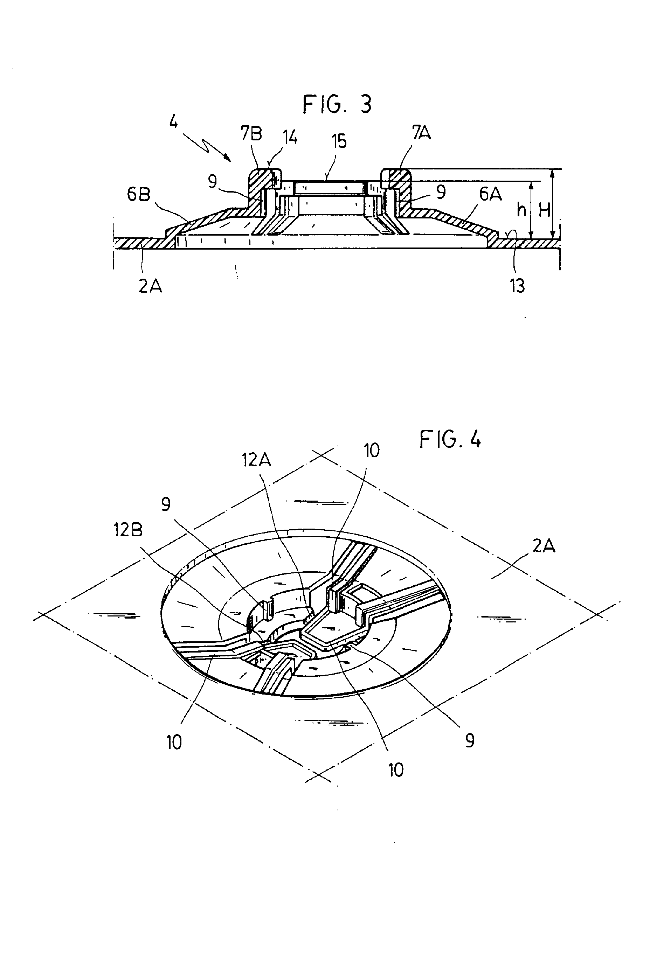

Additionally, the upper portions 7A, 7B of the free ends of the centering means 6A and 6B of the hub may be shaped in such a way that each has two flat side regions 12A and 12B, each of said flat side regions 12A and 12B being parallel to the nearest side surface of the adjacent retaining tab. Thus, when said upper portions 7A, 7B impinge laterally against the retaining tabs 5A, 5B, the contact surface therebetween is greater and, therewith, the wedging force that keeps said retaining tabs 5A, 5B in the disc retaining position is considerably increased (see Figure 4).

Additionally, each centering means 6A, 6B of the hub may be provided on the lower surface thereof with at least one stiffening rib 9 arranged perpendicular to the direction of the wedging force and holding the retaining tabs 5A, 5B in the disc retaining position (see Figures 4 and 5).

Additionally, each retaining tab 5A, 5B of the hub may be provided on the lower surface thereof with a perimetric reinforcing rib 10.

The general structure of the case 1 described above does not form part of the claimed invention nor does it have any limiting nature. Thus, the case may include one or more hubs disposed on one or both major inner surfaces of the case.

Those skilled in the art will understand that many variations of the form of the described device are possible, whereby the scope of protection should be understood to be limited only by a broad construction of the literality of the following claims.

## Claims

1. An antitheft device for cases for digital versatile discs and the like, the case (1) being of the general type formed by a box and a lid or by two semi-boxes (2A, 2B), both being square in plan view, having three free sides and being hingedly connected on the respective fourth side which forms a spine (3), in such a way that, when the case is closed, it has the general form of a book, comprising spring closing means (11), one or more hubs (4), provided with retaining tabs (5A, 5B) and disc centering means (6A, 6B) formed by concentric circular sector segments, wherein the distance (H) from the inner surface (13) of the case (1) having the hub (4) and the upper surface (14) of the centering means (6A, 6B) is greater than the distance (h) between said inner surface (13) of the case and the upper surface (15) of the retaining tabs (5A, 5B).

2. The device of claim 1, wherein the difference between the distance (H) from the inner surface (13) of the case (1) having the hub (4) and the upper surface (14) of said centering means (6A, 6B) and the distance (h) between said inner surface (13) of the case and the upper surface (15) of the retaining tabs (5A, 5B) ranges from 0.5 to 1.5 mm.

3. The device of claim 1 or claim 2, wherein the difference between the distance (H) from the inner surface (13) of the case (1) having the hub (4) and the upper surface (14) of said centering means (6A, 6B) and the distance (h) between said inner surface (13) of the case and the upper surface (15) of the retaining tabs (5A, 5B) is substantially 0.8 mm.

4. The device of any one of the foregoing claims, wherein the upper portions (7A, 7B) of the centering means (6A, 6B) of the hub (4) are widened, such that the distance (d) from the side surface of each of said upper portions (7A, 7B) of the centering means (6A, 6B) and the nearest side surface of each of the adjacent retaining tabs (5A, 5B) is smaller than the width (D) of the slots separating the centering means (6A, 6B) from the retaining tabs (5A, 5B).

5. The device of claim 4, wherein the upper portions (7A, 7B) of the free ends of the centering means (6A, 6B) of the hub (4) are shaped in such a way that each has two flat side regions (12A, 12B), each of said flat side regions (12A, 12B) being parallel to the nearest side surface of the adjacent retaining tab.

6. The device of claim 5, wherein each centering means (6A, 6B) of the hub (4) is provided on the lower surface thereof with at least one stiffening rib (9) arranged perpendicular to the direction of the wedging force that holds the retaining tabs (5A, 5B) in the disc retaining position.

7. The device of claim 6, wherein each retaining tab (5A, 5B) of the hub (4) is provided on the lower surface thereof with a perimetric reinforcing rib (10).
